# EUROPEAN PATENT APPLICATION

(11) **EP 2 575 291 A2**
(43) Date of publication of application: **03.04.2013**
(21) Application number: 12177137.2
(22) Date of filing: 19.07.2012
(51) Int. Cl.: H04L 12/22, H04L 29/06, G06K 7/00

(54) **Communication system including optical recognition and method using same**

(30) Priority: 30.09.2011 US 201113200791
(71) Applicant: Mitel Networks Corporation, Ottawa, ON K2K 2W7 (CA)
(72) Inventor: Soundrapandian, Suriyaprakash, Chandler, AZ 85226 (US); Ponnuswamy Sisubalan, Dhanalakshmi, Chandler, AZ 85226 (US)
(74) Representative: Derry, Paul Stefan

(57) **Abstract**

A system and method for communication are disclosed. The system and method can be used for a variety of applications, including administrative provisioning of information to particular users, handing off calls to or from another phone, for other application deployment, for pass of control, and similar applications. The system includes a server, a first device having an image displayed thereon, and a second device having a camera and client application software thereon. The image provides a medium for sending encrypted data between the devices and/or between a device and a server.

## Description

The present invention generally relates to electronic systems and methods. More particularly, although not exclusively, the invention relates to systems and methods that use optical recognition techniques to facilitate transfer of information in a secure manner.

Connecting a mobile device, such as a mobile phone, personal computer, tablet, or the like, to a secure network generally requires several manual steps by a mobile device user to enable the mobile device user to securely connect to the network. For example, the mobile device user may be required to find a required mobile program, manually load the program onto a mobile device, and manually install the program. Once the mobile program is installed, the user is often further required to enter information, such as a server name (e.g., a Unified Communication Advanced (UCA) server name), a user name, and a corresponding password, before the user is allowed access to the network. Once the user connection is setup, the user may then be requested to enter a password for the user's voicemail.

Although the amount of information required to be entered by the user for such communications can be relatively small, oftentimes, the user doesn't know or may have forgotten some of the information required to gain access to the network. As a result, additional user time to look up the information and/or administrator time to assist with the setup is required to allow the user to connect to the network. Additionally, entering the required information on a mobile device may be challenging because of the relatively small keyboards on such devices.

Similar challenges may be encountered when a mobile device user desires to transfer information to another device, which may be associated with the mobile device user or with another user. For example, a server name, username, and password may be required to set up another device that belongs to a user, and the user may not recall all of the requisite information for the setup and/or it may be difficult for a user to enter the requisite information using a mobile device.

In addition, with many communications systems, such as typical UCA systems, including multiple devices in communication with a server, each device generally communicates directly with the server, and communicates to other mobile devices through the server. Although this technique works well for many applications, it may be inefficient in some regards.

Accordingly, improved methods and systems for authenticating devices, for provisioning information, and for transferring information between devices are desired.

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
Figure 1 illustrates a communication system in accordance with various exemplary embodiments of the disclosure;
Figure 2 illustrates a method of provisioning information in accordance with additional exemplary embodiments of the disclosure;
Figure 3 illustrates a method for sharing information between devices in accordance with various exemplary embodiments of the disclosure;
Figure 4 illustrates another communication system in accordance with exemplary embodiments of the disclosure; and
Figure 5 illustrates a method for communication in accordance with further exemplary embodiments of the disclosure.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

The description of exemplary embodiments of the present invention provided below is merely exemplary and is intended for purposes of illustration only; the following description is not intended to limit the scope of the invention disclosed herein. Moreover, recitation of multiple embodiments having stated features is not intended to exclude other embodiments having additional features or other embodiments incorporating different combinations of the stated features.

The communication system and method of the present disclosure may be used for a variety of applications, such as administrative provisioning of information to particular users/devices, allowing users to provision additional devices, handing off calls to or from another phone, for application deployment, to temporarily provide access to a secure network, and the like. As set forth in more detail below, the exemplary system and method are generally easier to use, less time consuming, and require less manual input from users, compared to traditional systems and methods that provide similar functions.

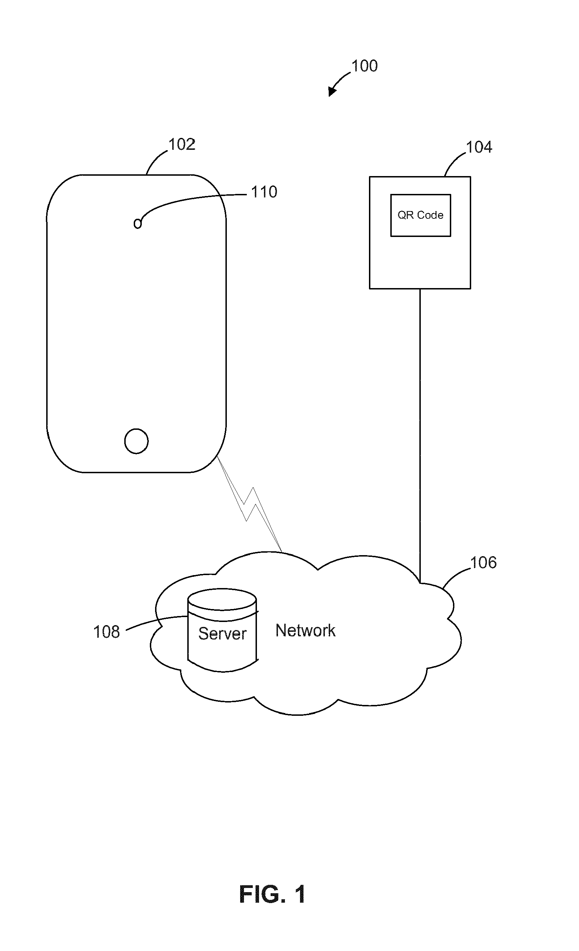

Figure 1 illustrates an exemplary system 100 in accordance with various embodiments of the disclosure. System 100 may be used for a variety of applications, such as provisioning information to a mobile client. For example, system 100 may be used to provision information to devices for new users, to new devices for existing users, to transfer information between a user's devices, to transfer information between devices associated with different users, to provide temporary access to a network for a device, and for application deployment to a device.

System 100 includes a mobile device 102, a display device 104, and a network 106. System 100 is illustrated with a single mobile device 102, display device 104, and network 106; however, systems in accordance with the disclosure may include multiple mobile devices 102, display devices 104, and multiple networks 106.

Mobile device 102 may be a smart phone, a tablet computer, a personal digital assistant, a personal computer, or any other mobile device that includes a camera 110 and associated scanning and/or client application software. By way of examples, mobile device 104 may be a smartphone running Android, iOS, Windows, Symbian, Blackberry OS, Linux operating systems, or similar operating systems, which is capable of running the client program described in more detail below.

Display device 104 may include any device capable of receiving information from server 108 and, in response to receiving the information, displaying an image, which is recognizable using optical recognition techniques. By way of examples, device 104 may include a desk phone, a conference unit, a computer (with a display), a printer, or another mobile device, capable of communication with server 108. Exemplary images suitable for use with various embodiments of the invention include QR code, barcodes, Data Matrix technology, and similar images.

Network 106 may include a local area network (LAN), a wide area network, a personal area network, a campus area network, a metropolitan area network, a global area network, or the like. Network 106 may be coupled to device 104 using an Ethernet connection, other wired connections, a WiFi interface, other wireless interfaces, or the like. Network 106 may be coupled to other networks and/or to other devices typically coupled to networks.

In operation, information is transferred from device 104 to mobile device 102 using an image displayed on device 104, and device 102 uses the information displayed on device 104 to communicate with server 108. By way of example, a user may activate scanning software on device 102 to enable camera 110, to activate optical recognition, and to perform one or more functions if and when the image displayed on device 104 is recognized. The user then places the camera proximate display device 104, having an image, such as a QR code, displayed, and the user scans the image with camera no of device 102. As the image is scanned, the scanning software determines whether the image includes recognizable information, and if so, the software performs additional functions based on the recognized information. For example, the software may cause device 102 to send an instruction to server 108 to send client application software and/or information (e.g., username, password, or the like) to mobile device 102 and for mobile device 102 to store the information in a desired location.

As discussed in more detail below, the system and method of the disclosure may be used to transmit encrypted data with server and client certificates (e.g., data that is pseudo understandable by a device or devices and that is understandable to a server hosting the devices), such that only the server and a client within the solution domain can access the data. In addition, Time-To-Live protocols, wherein the data is understandable by the server for only a limited amount of time, may be employed to provide additional security.

As noted above, the system and method of the present disclosure may be used for a variety of applications; various exemplary applications are illustrated below. The examples provided below are for illustration only and are not meant to limit the scope of the invention.

### Data Provisioning

In accordance with exemplary embodiments of the disclosure, system 100 provides a relatively easy way for mobile device users to be provisioned with a server 108 details and credentials, such as the server name and any requisite user name and/or passwords to, for example, setup the user's mobile device 102 for secure access to information on server 108. System 100 enables secure transfer of such information without requiring the user to manually enter the information. System 100 allows users to quickly and easily provision new or additional devices to allow access of the devices (e.g., device 102) to network 106 and server 108.

Use of system 100 may have several advantages over use of traditional systems, which require manual input of information to access a server/network. For example, system 100 does not require credentials, such as a username and password, to be communicated through other means, such as email or instant messaging. In addition, because system 100 uses image recognition technology, which requires a user to be relatively close to a displayed image, system 100 is relatively secure and is less susceptible to attacks, such as "middle-man attacks." Moreover, less work is required to set up system 100 and transfer information to various users.

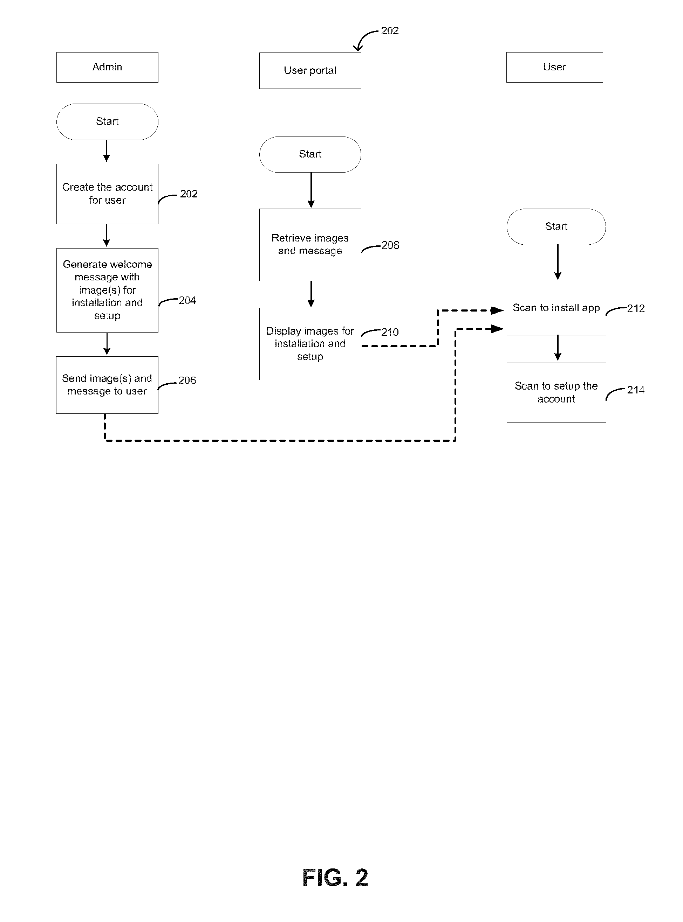

Figure 2 illustrates an exemplary method 200 for provisioning data using a system, such as the system illustrated in Figure 1. Method 200 includes the steps of creating a user account (step 202), generating a message and image(s) (step 204), sending the message and image(s) to a user (step 206), retrieving the image(s) and message at a user portal (step 208), displaying the image(s) (step 210), scanning an image to install an application (step 212), and scanning an image to setup an account (step 214).

During step 202, user information is stored on a server-e.g., server 108 that is part of or is connected to network 106. User information may include, for example, user account information, such as name, user name, password, position in an organization, server name, and the like. This information may be entered by an administrator of the server or network.

During step 204, a welcome message for the user and image(s) that contain client software information and account information for the user are generated. The embedded information may include, for example, a link to a server to access the software, user account information, name, user name, password, position in an organization, server name, and the like. In accordance with exemplary embodiments of the invention, the image(s) (e.g., a QR code or barcode) are automatically generated on server 108 and, as set forth in more detail below, can only be read by a designated mobile device. The image may be associated with a defined Time to Live (TTL), which is associated with a form of transmission and/or display. For example, in the case of email transmission of the image, the TTL may be 3, 24 or 48 hours; once the image is displayed on a portal, the TTL may be shorter, e.g. 5 minutes if displayed on a user portal or 2 minutes if displayed on an admin portal, such that the generated image is valid only for the TTL. Although described above in connection with generating separate images for uploading and installing the client software and provisioning client information, in accordance with alternative embodiments of the disclosure, both the client software and the provisioned information may be transferred using a single image using either one or two scanning steps.

During step 206, the image(s) and message generated during step 204 are transmitted to a user, to be displayed on, for example, a computer, PDA, mobile device, or the like. The information may be sent from, for example, server 108, which may include a Unified Communications and Collaboration (UCC) server, and may be sent in the form of a text message, an email, or similar communication. The information may also include user client software to enable desired access of device 102 to network 106. Alternatively, the image may be displayed using an admin device, such as an admin computer, PDA, mobile device, or the like. As noted above, a TTL associated with the image may be dependent on what device, where, or by whom the image is displayed, such that an admin device may display the image for a relatively short amount of time (e.g., 2-5 minutes), whereas the TTL for an image displayed by a user may have a longer TTL (e.g., 5-10 minutes), and an image sent via text or email may have an even longer TTL (e.g., 3 or 24-48 hours).

The image and message are retrieved during step 208. Once the message is retrieved, the user may be prompted as to whether to install the software on the user's mobile device. If the user elects to install the software, the user may be instructed how to display the image containing the embedded account information-e.g., on the user's portal and the image is displayed-e.g., on device 104, during step 210. Alternatively, the image may be displayed at the same time the message is retrieved. As noted above, in accordance with additional exemplary embodiments, the image may be displayed by an administrator on an admin device.

To install the software, step 212, the user may bring device 102 proximate device 104 and scan the image. If the image is recognized by device 102, a token is embedded on the mobile device, which device communicates with a server and sends a token and instructions to the server to enable upload of the client software onto device 102. If the token is recognized by the server, the server may send an email, link, or the like for access and installation of the client software on the mobile device.

Once the client software is installed, user account information is provisioned (step 241). In the illustrated case, the server generates an image associated with the user's account and all information required to obtain desired access to network 106 is embedded in the image and securely transferred to the user client via device 104, such that the user can scan the image on device 104 and does not need to enter any username, password, or other information to access authorized portions of network 106. As noted above, in accordance with alternative embodiments, the client application software and the corresponding information may be sent simultaneously and information corresponding to both may be embedded in a single image.

In accordance with various embodiments of the invention, information transmitted between mobile device 102, server 108, and a user portal, such as device 103, is encrypted. The following illustrates an exemplary method of encrypting the data. The method below is for illustration only, and is not meant to limit the scope of the invention.

### Exemplary Encryption

1. A secret private key (SPri1) is embedded on mobile device 102 during step 212 and its associated Public key (SPub1) is distributed on server 108.
2. Server 108 periodically creates (e.g., every day or two days) a public (SPub2) and private (SPri2) key pair.
3. A transformation is applied by server 108 on the user's server name (DATA1) and user's id (DATA2) to generate a QR Code. QRCODE("DOE:" + BASE64ENC(SPub1(DATA1 + SPub2(DATA2+":"+RAND()))))
4. Upon scanning the QRCODE the client would fetch the data "DOE:" + BASE64ENC(SPub1(DATA1 + SPub2(DATA2+":"+RAND())))
5. Client would then strip the "DOE:" leading string to fetch the data BASE64ENC(SPub1(DATA1 + SPub2(DATA2+":"+RAND())))
6. Client would then apply Base64 decode to fetch the data SPub1(DATA1 + SPub2(DATA2+":"+RAND()))
7. Client would then use its private key (SPri1) to decrypt the data DATA1 + SPub2(DATA2+":"+RAND())
8. Then client would establish a HTTPS connection to Server Data1 and send the data SPub2(DATA2+":"+RAND()) to the server.
9. Server upon receiving the request from HTTPS connection from client would use its SPri2 key to decrypt the message to get the user's id DATA2.
10. Then server sends the credentials back to the client on the https connection. As illustrated, method 200 includes transferring and installing software on a user's device (a client). However, in accordance with additional exemplary embodiments of the disclosure, a client may already include the requisite software. In this case, a method including steps 204-210 and 212 may be employed to provision the client with desired information, such as information to access network 106 and/or server 108.

### Data Sharing

Once a mobile device (e.g., device 102) has been provisioned information, a user may provision additional devices and/or change a device that has access to network 106. For example, once a user has configured specific data, such as server, username, password, etc., as part of a UCC system or the like, such information may be directly transferred to another user by running the scanning and/or client application software described above, placing two devices proximate each other, and scanning an image displayed on a first device with a second device to upload the information from the first device to the second device.

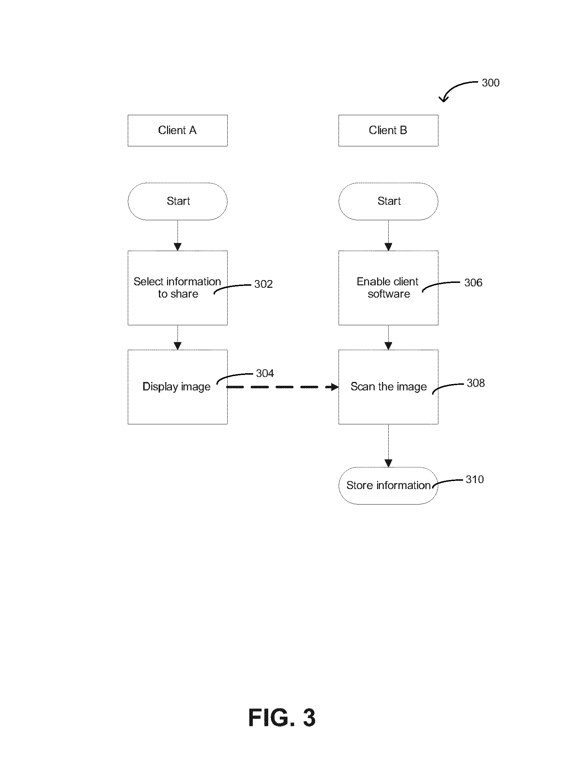

Figure 3 illustrates a method 300 for sharing information between two or more devices. Method 300 can be used, for example, to set up a new client, synch data between clients, and/or enable services involving multiple clients. For example, method 300 can be used to share local client information corresponding to Wi-Fi, Bluetooth, location-based status change settings and the like stored on one client with another client.

When sharing data between two devices, client software (e.g., the same or similar client software transferred according to the same method as set forth in step 212) may already be loaded onto both the device provisioning the data and the device receiving the data. This provisioning of additional devices may be allowed by the client software or may need to be authorized, for example, during step 212. If authorized, information may be transferred from one mobile device to another device.

In accordance with some embodiments of the invention, all users will be authorized to provision other devices associated with or owned by the respective users. For example, a user may specify information associated with a particular account (e.g., contacts information, username, password, server name for a particular location, and the like) to be provisioned from one device (e.g., a mobile phone) associated with the user to another device (e.g., another phone, computer, tablet, or the like) associated with the user. Allowing users to provision their own devices eliminates the requirement to know the server name, username, password and/or for an IT specialist or an administrator to be involved in transferring or copying the requisite information. Method 300 can also be used to allow users to sync their private data, such as Network, Location, and Bluetooth Connection, between devices, without using any unsecured transmission.

Method 300 includes the steps of selecting information on a first device to share (step 302), displaying an image on the first device associated with the information to be shared (step 304), enabling client software on a second device (step 306), scanning the image on the first device using the second device to read the image (step 308), and storing information associated with the image on the second device (step 310).

Step 302 may include, for example, a user selecting information, such as user setting for a particular UCA server to be published. Once the data to be shared is selected, an image, such as a QR code corresponding to the data to be shared, is displayed (step 304). The image may be previously generated and stored on the device or the image may be generated in response to the information selected by the user.

During step 306, client software (e.g., client software obtained during step 212, described above) is enabled, such that a camera on a second mobile device 102 is activated and recognition software is enabled. Next, the image displayed during step 304 on first device 102 is scanned using second mobile device 102. If the image displayed on the first device is recognized during step 308 by the second mobile device, the data or information associated with the displayed image is uploaded onto and stored (step 310) on the second device.

### Client-triggered operations

The system and method described herein can also be used to facilitate communication directly between multiple clients and between clients and a server. Typically, for services provided by a server, such as a UCA server, each client communicates directly with the server, such that the server is the only device that communicates directly with each client. With traditional systems, when a client desires a service provided by the server, the client sends a command to the server, and the server may then directly communicated with one or more clients connected to the server.

In contrast, systems in accordance with various exemplary embodiments of the present disclosure allow for direct communication between clients as well as between a server and clients. This allows easier and more efficient communication between clients.

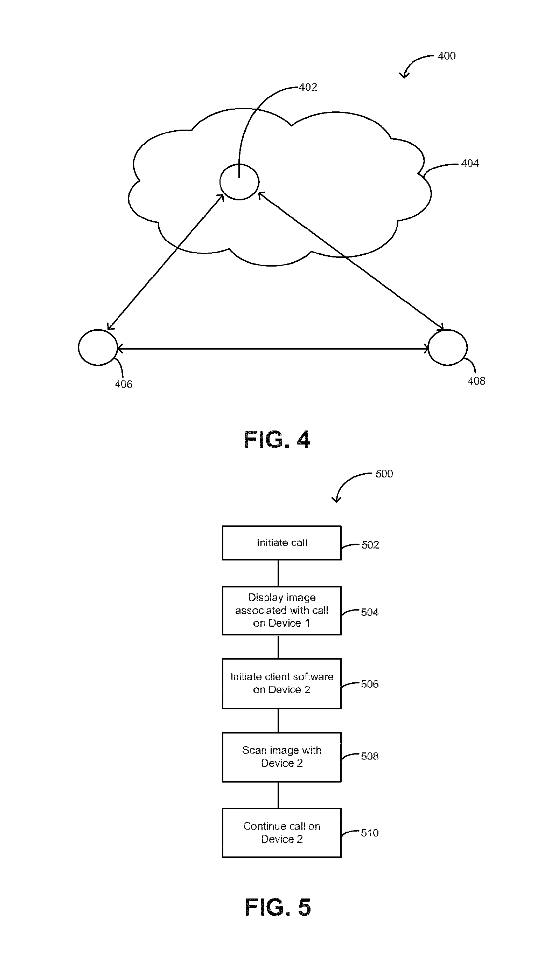

Figure 4 illustrates a system 400 configured for client-triggered services in accordance with exemplary embodiments of the disclosure. System 400 includes a server 402, which may be part of a network 404, and multiple clients 406, 408. Server 402 and network 404 may be the same or similar as server 108 and network 106, and client 406 may be the same or similar as mobile device 102 and/or display device 104, as describe above. System 400 may be used for a variety of applications, including audio telecommunications, telephone conferencing, web conferencing (AWC), and the like. As explained in greater detail below, system 400 can hand off calls between clients, without manually entering any information, but rather by automatically transferring information about the participant(s) using the optical recognition techniques as described herein. System 400 may also be used to facilitate dissemination of information to participants of a conference call regarding participants joining or leaving the conference call and may also allow for monitoring active participants in the conference by identifying participants as they join or leave the conference. The participant list information may be displayed on, for example, a screen of a client device.

Similar to the techniques described above in connection with system 100, system 400 can use encrypted information that is transmitted between clients and between a client and a server. As noted above, the clients use tokens that are secure and pseudo understandable by the client and that are understandable by the server-e.g., for a specified TTL.

### Call handoff

The client-triggered system and method described above can be used to transfer a call from one device associated with a user to another device associated with the same user. With a traditional system, a call handoff is initiated by a user by instructing a server to handoff the call. The server then causes all clients associated with that particular user to ring or a user may specify to which client the call should be transferred. Although this approach works relatively well, it is relatively inefficient because of the lack of direct client-to-client communication.

Figure 5 illustrates a method 500 of using system 400 to facilitate call handoffs directly between clients, which allows users to quickly and easily specify to where a call should be transferred. Method 500 includes the steps of initiating a call with a first device (step 502), displaying an image associated with the call on the first device (step 504), initiating client software on the second device (step 506), scanning the image on the first device with the second device (step 508), and continuing the call on the second device (step 510).

During step 502, a call is initiated and a first device (e.g., client 406) communicates directly with a server (e.g., server 402).

During step 504, an image associated with the call is displayed on the first device. The image may automatically display when a call is initiated, or the user may use the client software to request a call handoff, at which time the image may be displayed.

During step 506, the user initiates the client software on a second device to activate the camera on the second device. The user then brings the second device proximate the first device and scans the image displayed on the first device, step 508. Once the image is scanned, the user may be asked to confirm the call handoff using either device, and if confirmed, the call continues on the second device, step 510.

### Transferring calls

Similarly, calls may be transferred from one device associated with a first user (e.g., a mobile phone, a desk phone, a conference phone, a computer, or the like) to or from another device associated with a second user (e.g., a mobile phone), using system 400 and method 500.

Typically, users can push calls from, for example, a mobile device to a particular desk phone by entering dual tone multi-frequency (DTMF) or by using another application to instruct a PBX (Private Branch Exchange) to move the call from one device to the other. Such call transfers generally take place between a desk phone associated with a user and a mobile phone associated with that user, since the corresponding data is known to the system (e.g., a UCA/PBX). Alternatively, calls can be transferred to or from a first user to a second user by placing a call on hold and having the first user enter a phone number or other contact information associated with the second user.

In accordance with various embodiments of this disclosure, calls are transferred to or from different devices, which need not be associated with a particular user, using optical recognition techniques, in a manner such that no information (e.g., phone number, server name, user name, password) is required to be manually entered by any user to transfer the call.

By way of example, a first device may include a display and a second device may be enabled with the client software as described above. To transfer a call from the first device to the second device, the mobile client application is enabled on a second device, the second device is placed proximate the first device, and the first user may indicate the first user would like the call transferred. If the first user indicates the call should be transferred, a second user scans an image on the first device. During this time, the call may be placed on hold. If image is recognized by the client application software on the second device, the requisite mobile device and/or phone information corresponding to the second device is communicated to a server (e.g., server 402) and the second device instructs the server to transfer the call from the first device to the second device. The call is then transferred by the server from the first device to the second device. For example, a PBX routed mobile call can be transferred to a desk phone or *vice versa* or a call may be transferred between mobile phones, using these techniques.

### Building Community Groups

In accordance with yet additional exemplary embodiments of the invention, the system and method of the disclosure is used to rapidly build community groups or participant lists. Referring momentarily to Figure 4, system 400 can be used to build a community group or participant list by accessing user information on device 406 as device 408 is placed proximate device 406. For example, while running a client program, as a user places mobile device 408 proximate device 406, the user may be prompted as to whether the user would like to join a particular group or be added to a participant list-e.g., a group of people at a meeting or on a conference call or any other group. The user may respond "yes," in which case a corresponding participant list for that group is updated accordingly. Participants may similarly be deleted from groups using these techniques.

### Providing Temporary Access to Applications or Services on a Network

In accordance with additional embodiments of the invention, the communication system (e.g., system 100 or system 400) can be used to provide temporary authorization to the user to, e.g., network 106 or a portion thereof, by passing requisite login and/or other information from, for example, device 104 to mobile device 102. Such access may be provided on a temporary basis using temporary login information, by providing a time-out, or the like. Such access may be to, for example, provide administrator access to a technician troubleshooting the system.

### Pass of Control

In accordance with yet additional embodiments of the disclosure, the system and method can be used to pass control from, for example, person(s) or group(s) to another person(s) or group(s). By way of example, a manager on duty can use system 100 to "log in" for a shift and another manager can "log out" by running the client program on device 102 and passing device 102 proximate device 104. The client program may ask for verification of the user's intent to log in or out of a particular shift.

The present invention has been described above with reference to a number of exemplary embodiments and examples. It should be appreciated that the particular embodiments shown and described herein are illustrative of the invention and its best mode and are not intended to limit in any way the scope of the invention as set forth in the claims. It will be recognized that changes and modifications may be made to the exemplary embodiments without departing from the scope of the present invention. These and other changes or modifications are intended to be included within the scope of the present invention, as expressed in the following claims.

## Claims

1. A method for provisioning data, the method comprising the steps of:
creating a user account comprising information on a server;
generating a first image corresponding to the information;
sending the first image to a user;
displaying the first image;
scanning the first image using a device; and
securely transferring the information from the server to the device.

2. The method of claim 1, further comprising the step of provisioning the first mobile device to join a network.

3. The method of claim 1 or claim 2, wherein the step of securely transferring the information comprises installing a client program on the device, and/or wherein the step of securely transferring comprises sending information that is understandable by the server and that is pseudo understandable only to a device associated with the user.

4. The method of any preceding claim, further comprising the steps of:
generating a second image; and
transmitting the second image to the first device.

5. The method of any preceding claim, further comprising the step of transferring a call between the first device and a second device.

6. A communication system, the system comprising:
a first device comprising a camera and scanning software;
a second device comprising a display configured to display an image; and
a network, comprising a server, the network coupled to the first device and the second device, and the server comprising information corresponding to the image.

7. The communication system of claim 6, wherein the first device further comprises client application software.

8. The communication system of claim 6 or claim 7, wherein the information is understandable by the server and is pseudo understandable only by a client within a solution domain.

9. The communication system of any of claims 6 to 8, wherein the image is associated with a defined Time to Live.

10. The method of any of claims 1-5 or the system of any of claims 6-9, wherein the information comprises one or more of: server name, user name, and password.

11. The method of any of claims 1-5 and 10 or the system of any of claims 6-10, wherein the server comprises a Unified Communications and Collaboration server.

12. A method of communication between a plurality of devices, the method comprising the steps of:
providing a first device;
providing a second device;
selecting information on the first device;
displaying an image associated on the first device, the image associated with the information;
enabling client software on the second device;
scanning the image on the first device using the second device; and
storing the information on the second device.

13. The method of claim 12, wherein the first device is associated with a first user and the second device is associated with a second user.

14. A method of transferring a call, the method comprising the steps of:
providing a first device;
providing a second device;
initiating a call with the first device;
displaying an image associated with the call on the first device;
scanning the image on the first device with the second device; and
as a result of scanning the image, transferring the call from the first device to the second device.

15. The method of any of claims 1-5 or 10-14 or the system of any of claims 6-m, wherein the image is selected from QR code, barcode, and Data Matrix technology.
